# EUROPEAN PATENT SPECIFICATION

(11) **EP 3 747 709 B1**
(45) Date of publication and mention of the grant of the patent: **04.01.2023**
(21) Application number: 19305739.5
(22) Date of filing: 07.06.2019
(51) Int. Cl.: B60S 1/40

(54) **WINDSHIELD WIPER BLADE CONNECTOR**
SCHEIBENWISCHERBLATTVERBINDER
CONNECTEUR DE BALAI D'ESSUIE-GLACE DE PARE-BRISE

(43) Date of publication of application: 09.12.2020
(73) Proprietor: Valeo Systèmes d'Essuyage, 78322 Le Mesnil Saint Denis (FR)
(72) Inventor: GAUCHER, Vincent, 63500 ISSOIRE (FR); HOUSSAT, Stéphane, 63500 ISSOIRE (FR); JOMARD, Olivier, 63500 ISSOIRE (FR); POLEK, Agata, 32 050 SKAWINA (PL); MARTYNIUK, Adam, 32 050 SKAWINA (PL)
(74) Representative: Valeo Visibility

(56) References cited:
- US-A1- 2003 066 153
- US-A1- 2007 017 054

## Description

### TECHNICAL FIELD OF THE INVENTION

A wiper blade assembly of the type used for clearing water from a windshield or windscreen, and more particularly toward an improved connector for joining a wiper blade to any one of various style wiper arms ends including hook slot styles.

### BACKGROUND OF THE INVENTION

Windshield wipers are used to remove water from the windshield or windscreen of motor vehicles and in related applications. In a typical wiper assembly, a wiper blade connects to the free end of an oscillating or sweeping wiper arm through a central connection device, known as a connector. The connector is usually clipped onto the top side of the wiper blade, generally midway along its length.

Traditionally, the free sweeping end of wiper arms are configured in one of several recurring styles which include hook slot arms. Hook-slot style arms present an end portion which is bent to form a hook. They are attached by sliding the hook over the connector until a tab borne by a cantilevered beam of the connector automatically locks in a slot of the hook when the arm reach an attached position. Generally, the hook is prevented to slide beyond its attached position by abutment against a stop.

Hook-slot type of wiper arm end may come in a variety of sizes. For example, hook-slot type arms typically have hook bar widths of 9 mm or 12 mm, and a thickness of 4 mm. The hook of these two size classes are referred to as either 9x4 or 12x4 styles. In at least one of these size classes, there are also long hooks and short hooks. There are for instance long 9x4 wiper arms and short 9x4 wiper arms.

To adapt these two thicknesses of arm wiper hook, the connector typically comprises a first stop to block the 12x4 wiper arm in attached position, and a second stop to block the 9x4 wiper arm in attached position. The first stop and the second stop are generally offset longitudinally so that the 9x4 wiper arm passes between the first stop during its sliding toward the attached position.

For replacement blade sales, the connector must be able to accommodate several, or more preferably all, of these arm end sizes. However, wiper arms with the same width but having hooks of different length can be secured by the same tab, but they cannot be blocked in their attached position by the same stop. Indeed, the slot of a short 9x4 arm will abut in its attached by the second stop, but the long 12x4 arm will reach its attached position before the abutment against the second stop.

Document US 2007/017054 A1 discloses the preamble of independent claim 1.

### SUMMARY OF THE INVENTION

The invention provides a connector for joining a wiper blade frame to a hook wiper arm, the connector comprising:
- a central body portion;
- two side walls interconnected to the central body which define an upper and a lower channels for receiving a hook of the wiper arm in an attached position in which it is hooked around the central body portion of the connector;
at least one protrusion extending at one free end of at least one of said side walls, the protrusion being mounted so as to pivot transversally between an inner position to which the protrusion is elastically biased and in which the protrusion extends into one of the channels, and an outer position in which the protrusion extends into the external area, wherein the connector further comprises at least a pair of opposed movable protrusions each arranged symmetrically on a side wall on both sides of the same channel, and wherein the connector comprises two pairs of opposed movable protrusions, each pair being arranged in each channel.

Embodiments of the connector according to the invention may also include one or more of the following features:
- in its inner position, each protrusion is wholly retracted with respect to the outer face of the corresponding side wall;
- each movable protrusion is borne by a resilient leg which present a front end fixed to the associated side wall and a rear free end;
- the leg is formed by slitting a rear end portion of the associated side wall.

The invention also provides an assembly comprising a wiper blade frame comprising a rivet extending crosswise between two ears of a bridge portion and a connector according to the teachings of the invention, characterized in that the connector is adapted to snap-fit over the rivet pivotally around an axis of the rivet so that the wiper blade frame can pivot between a first service up position in which a rear portion the side walls comprising the protrusions is out of the bridge portion and a second use position in which the protrusions of the lower channel are received between the ears of the bridge portion.

Embodiments of the assembly according to the invention may also include one or more of the following features:
- when the protrusions of the lower channel occupy their inner position while the wiper blade frame is in its service up position, pivoting of the wiper blade frame toward the use position is prevented by abutment of upper edge of the ears against the protrusions;
- when the wiper blade frame occupies its use position, the movement of the protrusions toward their outer position is prevented by abutment of the protrusions against an inner face of the ear;
- in the use position of the connector, the protrusions of the upper channel stay outside of the ears so that the wiper blade frame can pivot freely between its two angular positions even when the protrusions occupy their outer position.

### BRIEF DESCRIPTION OF THE DRAWINGS

Other features and advantages of the invention will be apparent from the following detailed description, including the drawings, in which:
- figure 1 is a perspective view of an exemplary wiper blade frame with a connector according to the invention exploded therefrom;
- figure 2 is a perspective view of a hook-slot type wiper arm intended to be attached with the connector of figure 1;
- figure 3A to 3B is an illustrative view of a variety of 9x4 and 12 x4 wiper arms that can be connected directly to the connector of figure 1;
- figure 4 is a bottom perspective view of the connector of figure 1;
- figure 5 is a perspective cross-sectional view of the connector taken generally along the longitudinal line 5-5 in figure 4;
- figure 6A is a bottom view of the connector of figure 4 in which protrusions of the lower channel are in their inner position;
- figure 6B is a top view of the connector of figure 4 in which protrusions of the upper channel are in their outer position;
- figure 7 to 10 illustrate the connector in cross-section as a short 9x4 hook end of a wiper arm is progressively connected thereto;
- figure 11 shows the connector in cross-section with a long 9x4 hook end of a wiper arm connected thereto;
- figure 12 is a side view of the wiper blade frame in a service up position with respect to the connector and the wiper arm;
- figure 13 is a side view of the wiper blade frame in a use position with respect to the connector and the wiper arm;
- figure 14 is a bottom view of the connector when the wiper blade frame is in its use position;
- figure 15 is a cross section view according to the cross section 15-15 of the figure 16;
- figure 16 is a side view of the wiper blade frame in an intermediate position with respect to the connector and the wiper arm;
- figure 17 is a top view of the connector when the wiper blade frame is in its use position.

### DETAILED DESCRIPTION OF THE DRAWINGS

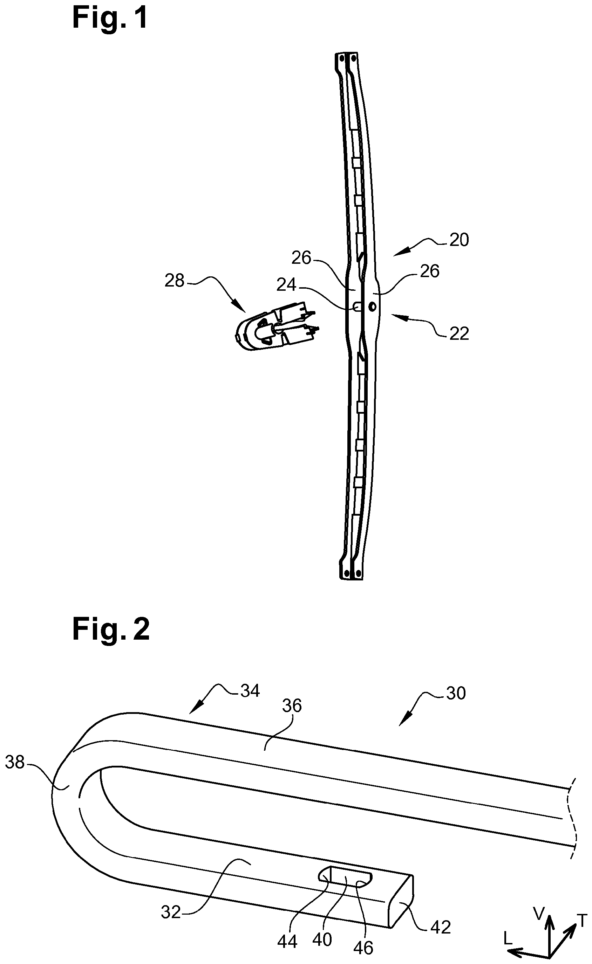

Referring to the figures, wherein like numerals indicate like or corresponding parts throughout the several views, one style of windshield wiper blade frame is generally shown at 20 in figures 1 and 2.

In the following description, longitudinal, vertical and transverse orientations are indicated by the geometrical frame of reference "L,V,T" of the figures. The vertical orientation is not related to the direction of gravity.

The wiper blade frame 20 illustrated here is designed to receive an elongated wiper element (not showed) adapted for direct contact against the windshield of a motor vehicle to scrape water and snow from the windshield as the blade assembly is swept back and forth in an oscillating, repetitive pattern.

The wiper blade frame 20 comprises a bridge piece or portion 22 midway along its length. A rivet 24 is fixed crosswise between upstanding ears 26 of the bridge 22.

A connector, generally indicated at 28, is adapted to snap-fit over the rivet 24. The connector 28 forms the basis for connecting to a variety of hook-shaped wiper arms. The connector 28 is adapted to cooperate with any style of wiper blade frame 20 by attaching directly to the rivet 24.

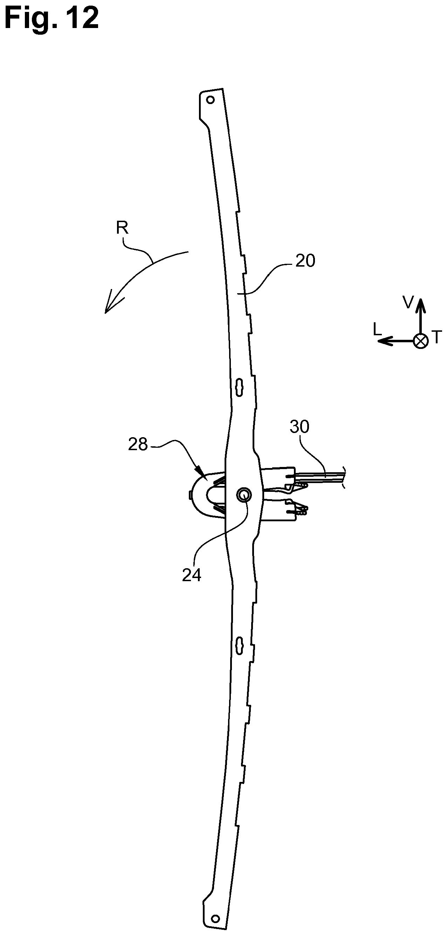

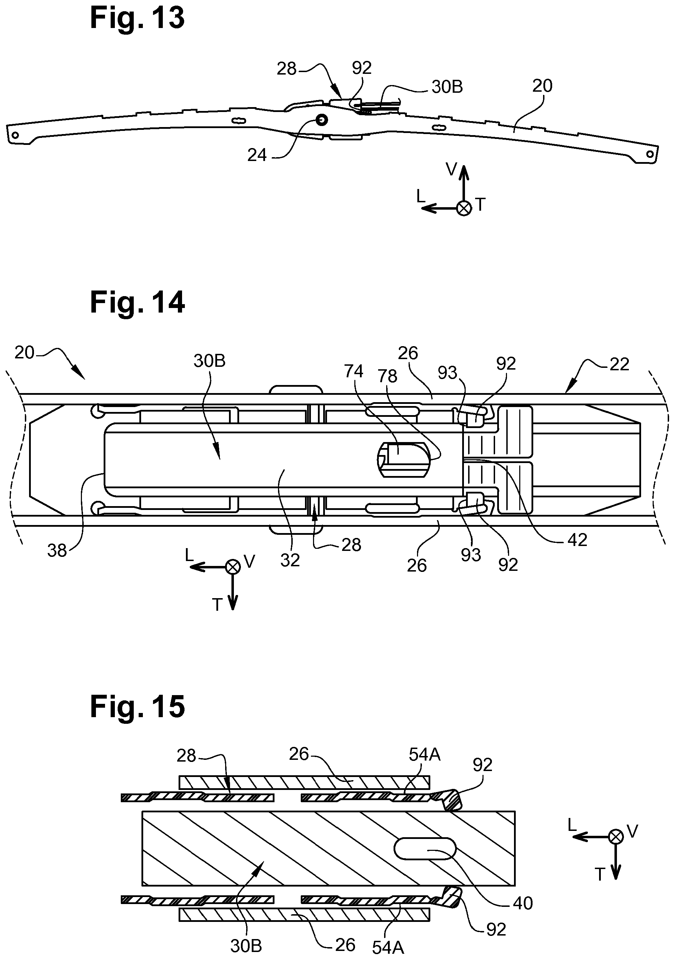

Once the connector 28 is adapted to the rivet 24, the wiper blade frame 20 can be pivoted around an axis of the rivet 24 between:
- a first angular position, said service up position, as shown in figure 12, where the wiper blade frame 20 is placed substantially perpendicular to the wiper arm 30. Only in this service up position can the wiper blade frame 20 equipped with the connector 28 be installed or removed from a hook style arm 30; and
- a second angular position, said use position, as shown in figure 13, in which the wiper blade frame 20 is arranged substantially parallel to the wiper arm 30.

As shown in Figure 2, in a hook-slot wiper arm 30, a distal end portion 32 of the wiper arm 30 is bent to define a hook 34. The hook 34 presents a U-shaped configuration comprises a longitudinal main portion 36 of the arm 30, the distal end portion 32 which is parallel to the main portion 36, and a bight portion 38 which link the distal end portion 32 to the main portion 36. The distal end portion 32 extends in a longitudinal direction.

A slot 40 is located in the distal end portion 32 near a free end 42 of the wiper arm 30. The bight portion 38 is arranged at a front extremity of the wiper arm 30 while the free end 42 of the wiper arm 30 is turned backward because of the U-shaped configuration of the hook 34.

The slot 40 faces the main portion 36 of the wiper arm 30. The slot 40 is delimited longitudinally by a front end 44 which is closer to the bight portion 38 and by a rear end 46 which is closer to the free end 42 of the wiper arm 30.

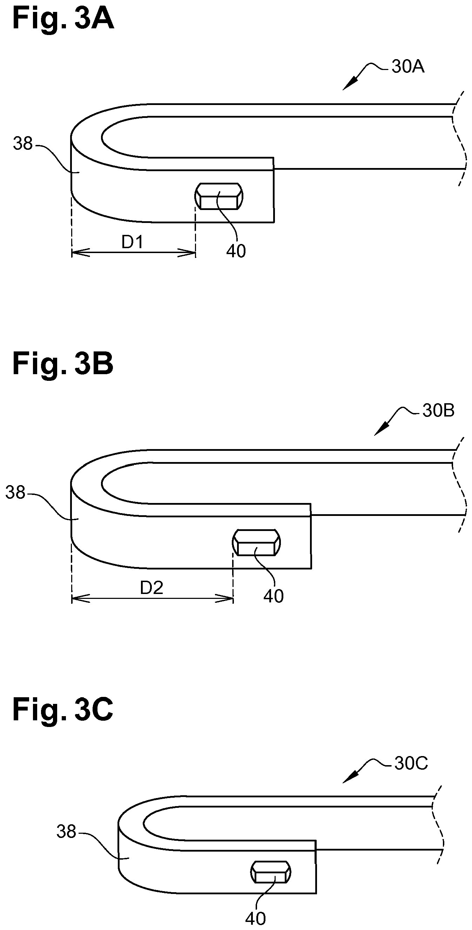

Hook type wiper arms 30 typically have hook bar thicknesses of 4 mm, especially for the wiper arms 30 for trucks. The hook 34 widths are commonly 9 mm or 12 mm with a thickness of 4 mm, so that these two size classes are referred to as either 9x4, as illustrated by the wiper arms 30A and 30B in the figures 3A and 3B, or 12x4, as illustrated by the wiper arm 30C in the figure 3C.

Moreover, there are wiper arms 30 with short distal end portion 32 and some with long distal end portion 32. For instance, there are 9x4 hook ends of the short length variety or short 9x4 wiper arms 30A, as illustrated in figure 3A, and of the long length variety or long 9x4 wiper arms 30B as illustrated on figure 3B. On a short 9x4 wiper arm 30A, the slot 40 is arranged at a shorter longitudinal distance "D1" of the bight end 38 than the distance "D2" between the slot 40 of a long 9x4 wiper arm 30B and its bight portion 38.

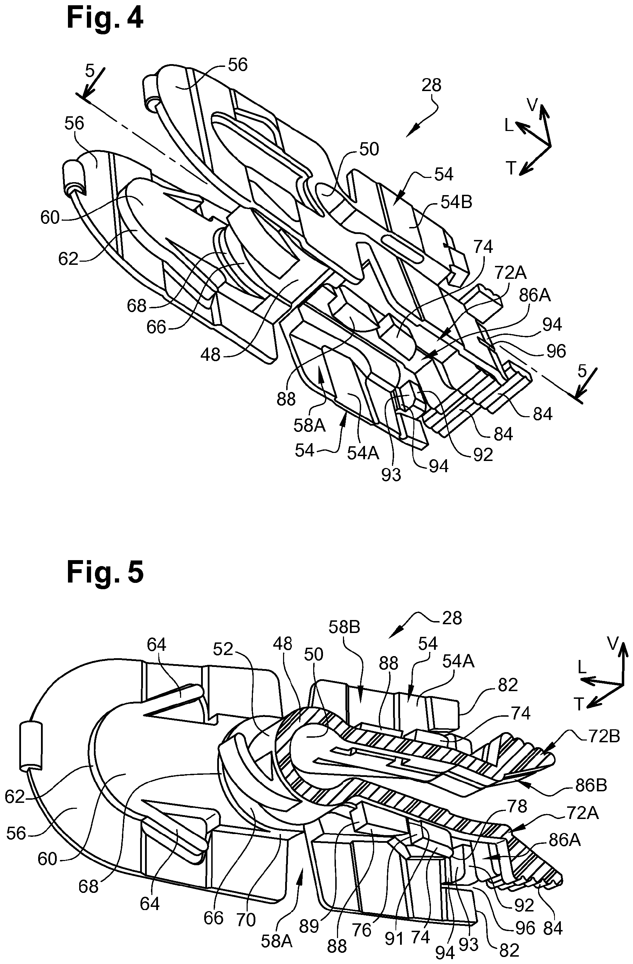

Figures 4, 5, 6A and 6B show various views of the connector 28 from different perspectives and also in a longitudinally sectioned view (FIG. 5). The connector 28 includes a central body section 48 in which a rivet-receiving socket 50 is formed. The rivet-receiving socket 50 has a key-hole shape that snap-locks to the rivet 24 via an interference-fit in its narrow throat area. The rivet-receiving socket 50 opens longitudinally toward the back.

The central body section 48 presents a rounded forward nose profile 52. The connector 28 further includes a pair of side walls 54 extending in vertical longitudinal planes. The side walls 54 interconnect the central body section 48 on respective inner faces 54A thereof. Each side wall 54 also comprises an outer face 54B opposite to the inner face 54A.

The side walls 54 are identical by symmetry with respect to a median longitudinal vertical plan of the connector 28. The side walls 54 include extensions 56 projecting beyond the nose profile 52.

The side walls 54 also extend above and below the central body section 48 to define a lower channel 58A and an upper channel 58B. The width of the channels 58A, 58B is greater than the width of the wider type of wiper arm intended to be attached, in this case, 12x4 wiper arm 30C. As discussed below, each channel 58A, 58B secures the main portion 36 or the distal end portion 32 of the hook 34.

Each side wall 54 comprises a first projection 60 which extends transversally into the channel 58A, 58B from an inner face. This first projection 60 is delimited in the forward direction by a rounded end face which forms a first stop 62 which block the sliding of the wider type of wiper arm, for example the 12x4 wiper arm 30C, in an attached position. The first stop 62 is arranged at a distance forward from the nose profile 52 of the central body section 48.

The first projection 60 also comprises an upper and a lower elastically flexible legs 64 extending from each end of the first stop 62 and inclined toward the back. These legs 64 are intended to center the hook 34 vertically relative to the central body section 48 of the connector 28.

Each side wall 54 also comprises a second projection 66 which extends transversally in the channel 58A, 58B beyond the first projection 60. This second projection 66 is limited to the front by a rounded end face which forms a second stop 68 in an attached position for the short 9x4 wiper arm 30A.

The second stop 68 is offset longitudinally with respect to the first stop 62. More particularly, the second stop 68 is arranged longitudinally between the nose profile 52 of the central body section 48 and the first stop 62.

The second projection 66 also comprises generally planar upper and lower faces 70 which extend longitudinally to the back from the ends of the second stop 68. The upper, respectively lower, planar face 70 is globally coplanar with the upper end, respectively lower end, of the first stop 62.

The first projections 60 are transversally spaced with a distance "W1" which is greater the width "W2" of the narrower type of wiper arms 30A, 30B, but less than the width of the wider type of wiper arm 30C. Therefore, the hook 34 of the 9x4 wiper arms 30A, 30B can be received in the channels 58A, 58B between the first projections 60.

A first cantilevered beam 72A extends from the central body section 48. The first cantilevered beam 72A, which is not directly attached to the side walls 54, is positioned at the top of the lower channel 58A. The first cantilevered beam 72A is used to secure the connector 28 to the wiper arms 30, particularly the 9x4 wiper arms 30A, 30B. To this end, the first cantilevered beam 72A includes a first tab 74 that is used to secure the connector 28 to a 9x4 wiper arm 30A, 30B in its attached position. The first tab 74 includes a ramped face 76 at a front end closer to the nose profile 52 and a stepped face 78 at the back end. The first tab 74 is arranged in a first longitudinal position with respect to the nose profile 52. When the first cantilevered beam 72A is in rest position, the first tab 74 extends vertically in the lower channel 58A. The first cantilevered beam 72A can resiliently bend from the rest position toward retracted position in which the first tab 74 is pushed upward outside the lower channel 58A.

The first cantilevered beam 72A comprises a rear free end that goes beyond a rear edge 82 of the side walls 54 to the back. The free end of the first cantilevered beam 72A includes a textured pushbutton 84 that may be depressed to bend the first cantilevered beam 72A and retract the first tab 74 from the slot 40 to release the connector 28 from the wiper arm 30.

Optionally, in the embodiment showed on the figures, the invention provides a connector 28 comprising at least a second cantilevered beam 86A extending longitudinally to the back from the central body section 48 to accommodate a 12x4 wiper arm 30C as illustrated in figure 3C. Indeed, for short 12x4 wiper arms 30C, the slot 40 is longitudinally offset from the first tab 74 when the wiper arm 30C abuts against the first stop 62 in its attached position.

The second cantilevered beam 86A presents a structure similar to the first cantilevered beam 72A. Therefore, it comprises a second tab 88 which is essentially similar to the first tab 74. It thus comprises a front ramped face 89 and a rear stepped face 91 However, the second tab 88 extends in a second position longitudinally offset with respect to the first tab 74 so that the second tab 88 engages a slot 40 of the 12x4 wiper arm 30C to secure the connector 28 to the wiper arm 30C in the attached position.

In this embodiment, the second tab 88 is closer to the first stop 62 than the first tab 74 so that it can engage the slot 40 of a 12x4 wiper arm 30C in its attached position.

In the embodiments showed in the figures, the first tab 74 and the second tab 88 are aligned longitudinally on the same side of the central body section 48, that is to say in the same channel 58A. The first cantilevered beam 72A and the second cantilevered beam 86A form a pair of cantilevered beams extending side by side on the top of the lower channel 58A, between the two side walls 54.

The cantilevered beams 72A, 86A of the pair can be bent independently of each other. Therefore, each cantilevered beam 72A, 86A can be bent toward its retracted position while the other cantilevered beam 86A, 72A stays in its rest position.

The pushbuttons 84 of the two cantilevered beams 72A of the pair are arranged side by side so that they can be pushed simultaneously with one finger to bend manually the cantilevered beams 72A, 86A of the pair toward their retracted position.

In order to simplify the use of the connector 28, it presents a second pair of first and second cantilevered beams 72B, 86B arranged in the upper channel 58B. Each cantilevered beams 72B, 86B of the second pair also comprises a first tab 74 and a second tab 88. The tabs 74, 88 of second pair are arranged symmetrically with respect to the tabs 74, 88 of the first pair in relation to a median transverse longitudinal plane of the central body section 48. The connector 28 can thus be used upside down with the same result and the same procedure of attachment.

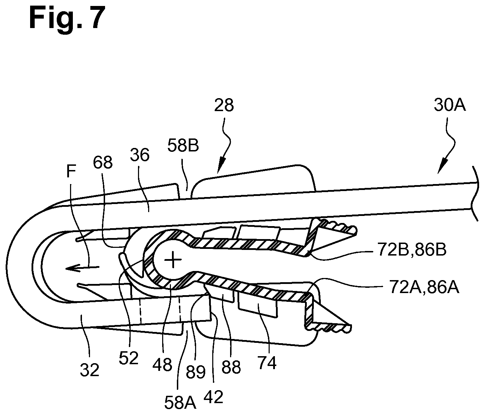

As shown in Figs. 7 to 11, to attach the connector 28 to a short 9x4 wiper arm 30A, the connector 28 is positioned with the upper channel 58B (or indifferently the lower channel 58A when the connector 28 is symmetric) next to the main portion 36 of the wiper arm 30B. Since there are no slots in the main portion 36 of the wiper arm 30A, the cantilevered beams 72B, 86B of the upper pair are biased toward their retracted position in which they stay until the detachment of the wiper arm 30A.

The connector 28 is then moved along the wiper arm 30A in the direction indicated by the arrow F, so that the nose profile 52 of the central body section 48 passes between the distal end portion 32 and the main portion 36 of the wiper arm 30A, and the bight portion 38 of the wiper arm 30A passes between extensions 56 of the connector 28. The distal end portion 32 is thus received in the lower channel 58A.

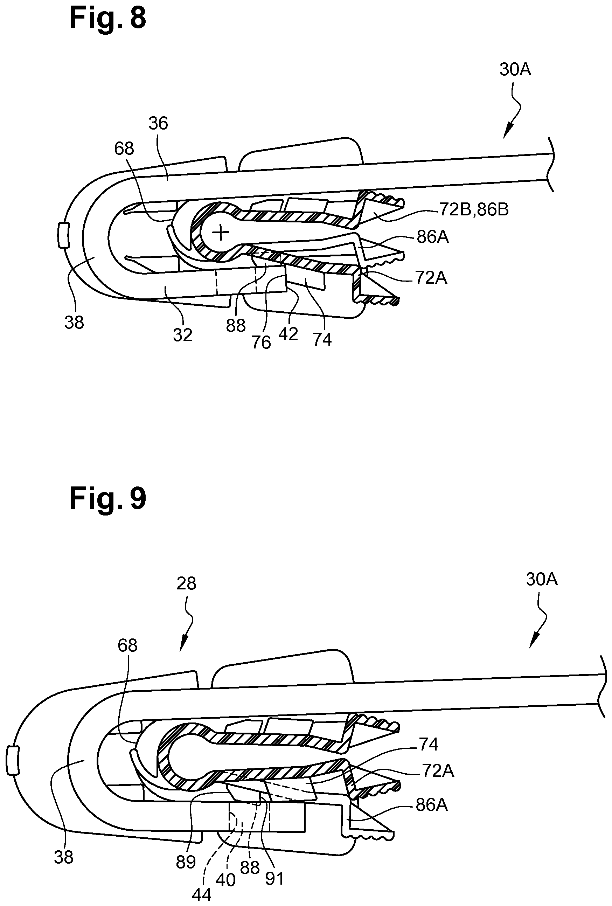

When the free end 42 of the wiper arm 30A encounters the second tab 88, the hook 34 slides along the ramped face 89 in a horizontal direction. This generates an upward force that pushes up on the second cantilevered beam 86A and bends the beam 86A (Fig. 8) from the rest position toward the retracted position. The hook 34 continues to exert the upward force on the second cantilevered beam 86A until the stepped face 91 of the second tab 88 is aligned with the slot 40. The second cantilevered beam 86A snaps back toward its rest position and engages the second tab 88 into the slot 40 (Fig. 9).

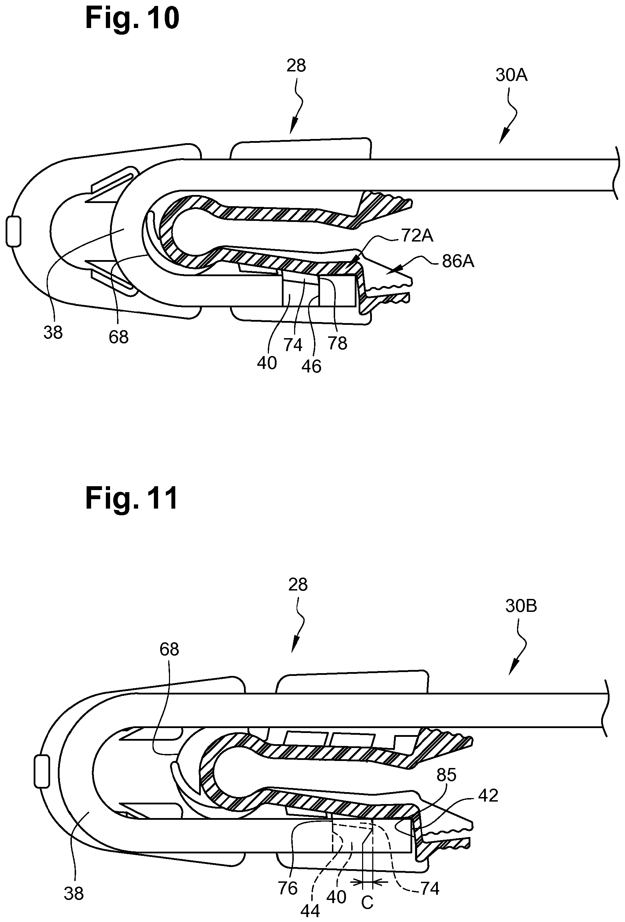

The connector 28 continues to slide longitudinally forward in the hook 34, the front end 44 of the slot 40 slides along the ramped face 89 of the second tab 88 in a horizontal direction. This generates an upward force that pushes up again on the second cantilevered beam 86A and bends the beam 86A (Fig. 10) from the rest position toward the retracted position. The second cantilevered beam 86A will be maintained toward its retracted position by contact with the distal end portion 32 of the hook 34 until the detachment of the wiper arm 30A.

When the free end 42 of the wiper arm 30A encounters the first tab 74, the hook 34 slides along the ramped face 76 in a longitudinal direction. This generates an upward force that pushes down on the first cantilevered beam 72A and bends the beam 72A (Fig. 9) from the rest position toward the retracted position. The hook 34 continues to exert the upward force on the first cantilevered beam 72A until the stepped face 78 of the first tab 74 is aligned with the slot 40. The first cantilevered beam 72A snaps back into place in its rest position and engages the first tab 74 into the slot 40 (Fig. 10).

At that point, the short 9x4 wiper arm 30A is prevented to continue its longitudinal sliding by abutment of the bight portion 38 against the associated stop 68. The wiper arm 30A is in its attached position. When the first tab 74 is in the slot 40, the stepped face 78 of the first tab 74 abuts against the rear end 46 of the slot 40 to secure the wiper arm 30A in its attached position on the connector 28.

The connector 28 may be removed from the arm 30A in a two-step process. A user first depresses the pushbuttons 84 to push down simultaneously on the two cantilevered beams 72A, 86A of the lower pair to release the engaged tab 74 or 88 from the slot 40, and to maintain the other tab in its rest position. The user then slides the connector 28 backward from between the distal end portion 32 and the main portion 36.

As represented in figure 11, when the wiper arm is of the long 9x4 type 30B, the first tab 74 is received in slot 40 while the bight portion 38 has not reached the second stop 68. Therefore, if a user continues to slide the connector 28 forward until the bight portion 38 encounters the second stop 66, the first cantilevered beam 72A will bent toward its retracted position by contact of the front end 44 of the slot 40 with the ramped face 76 of the first tab 74. Therefore the first tab 74 will no longer block the sliding of the connector 28 backward with respect to the wiper arm 30B.

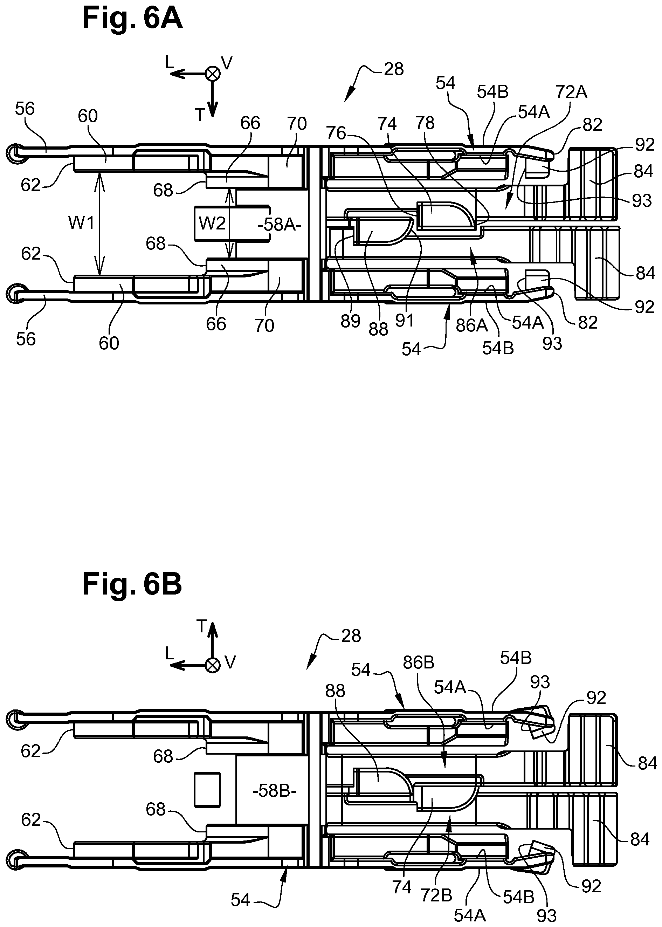

To solve this problem, the invention proposes that the connector 28 comprises at least a protrusion 92 mounted movable transversally in a side wall 54 between:
- an inner position where to it is elastically biased and in which the protrusion extends from an inner face 54A of the side wall 54 in one of the channels 58A, 58B to stop the long 9x4 wiper arm 30B in its attached position by contact of a stepped face 93 of the protrusion 92 turned to the front with the end face 42 of the wiper arm 30B, as shown in figure 6A; and
- an outer position in which the protrusion 92 extend from an outer face 54B the side wall 54, as shown in figure 6B. To this end, each protrusion 92 is arranged near the edge 82 of the side wall 54, at proximity of the free end of the cantilevered beams 72A, 72B, 86A, 86B.

In its inner position, the whole protrusion 92 is retracted with respect to the outer face 54B of the side wall 54.

In the embodiment represented on the figures, the connector 28 comprises at least a pair of opposed movable protrusion 92 each arranged symmetrically on a side wall 54 on both sides of the same channel 58A, 58B. Here, the connector comprises two pairs of opposed movable protrusion 92 extending in each channel 58A, 58B.

Each movable protrusion 92 is borne by a resilient leg 94 which present a front end fixed to the associated side wall 54 and a rear free end. The leg 94 is formed by slitting a rear end portion of the associated side wall 54 with a longitudinal slit 96.

In the service up position of the wiper blade frame 20, the rear portion the side walls 54 comprising the four protrusions 92 is out of the bridge portion 22. In this angular position, the protrusions 92 can be pushed in their outer position.

In use position of the wiper blade frame 20, the protrusions 92 of the lower channel 58A are received between the ears 26 of the bridge portion 22. The ears 26 of the bridge portion 22 are transversally spaced to receive the connector with a slight transversal clearance sufficient to allow the rotation of the connector 28. However, as shown in figure 14, in this angular position, the protrusions 92 are blocked in their inner position, their displacement toward the outer position being blocked by the ears 26.

When a long 9x4 wiper arm 30B is attached to the connector 28, the wiper blade frame 20 is in its service up position, as shown in figure 12. If the user pushes the connector 28 too far on the long 9x4 hook of the wiper arm 30B, the front end 44 of the slot 40 slides along the ramped face 76 of the first tab 74 in a horizontal direction. This generates an upward force that pushes up again on the first cantilevered beam 72A and bends the beam 72A from the rest position toward the retracted position. The first cantilevered beam 72A will be maintained toward its retracted position by contact with the distal end portion 32 of the hook 34. In this position, no tab is engaged in the slot 40 of the wiper arm 30B. This means that the wiper blade frame 20 is able to move freely with respect of the wiper arm 30B.

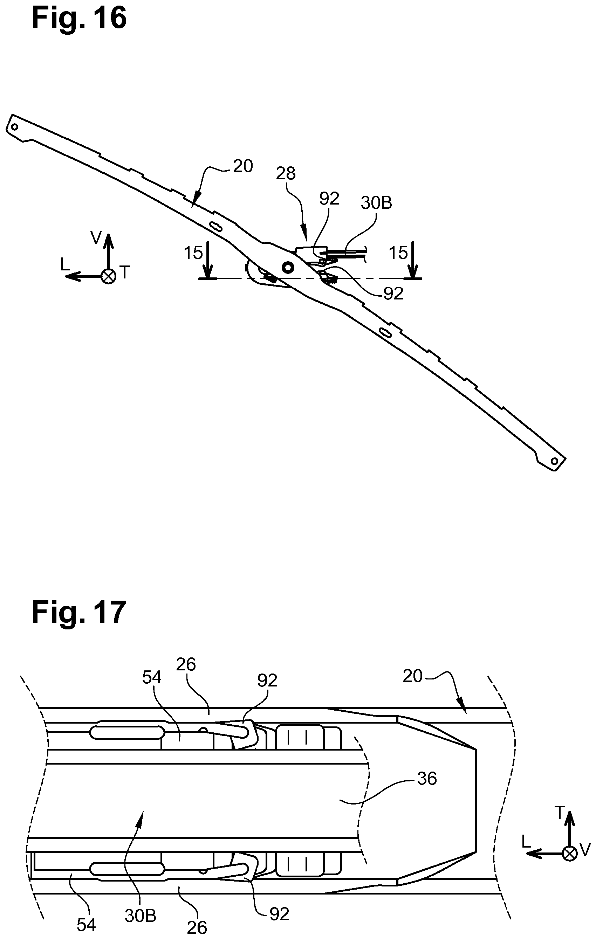

However, when the wiper arm 30B continues its sliding, the free end 42 spreads the opposite protrusions 92 of the pair to their outer position by pushing on the stepped faces 93, wherein the protrusions 92 extend into the external area outside of the channels 58A, 58B. The protrusions 92 are stuck in their outer position by contact with the distal end portion 32 of the hook 34 as shown in figure 15. When the user tries to pivot the wiper blade frame 20 from its service up position (Fig. 12) to its use position (Fig. 13) as indicated by the arrow "R", an upper edge of the ears 26 abuts against the protrusions 92, blocking the wiper blade frame 20 in an intermediate position shown in figure 16. The protrusions 92 act as a mistake proof device which warns the user that the connector 28 is not properly attached to the wiper arm 30B.

The user can thus pull the connector 28 until the first cantilevered beam 72A snaps back toward in rest position, the first tab 74 being engaged in the slot 40. In this position, the free end 42 of the wiper arm 30B has returned before the protrusions 92. The protrusions snap back in their inner position where the stepped faces 93 face longitudinally the free end 42 of the wiper arm 30B.

In this position, the wiper blade frame 20 can be pivoted in its use position (Fig. 13) with respect to the connector 28. In this angular position, the movement of the protrusions 92 toward their outer position is prevented by transversal abutment of the protrusions 92 against an inner faces of the ears 26, as shown in figure 14. This means that the sliding of the wiper arm 30B with respect to the connector 28 is blocked in both directions by the first tab 74 and by the stepped face 93 of the protrusions 92.

According to another aspect of the invention, since the width of the main portion 36 of the wiper arm 30B is generally the same as the width of the distal end portion 32, the protrusions 92 of the upper channel 58B are constantly pushed in their outer position by the main portion 36 of the wiper arm 30B even when the connector 28 is properly attached to the wiper arm 30B. As shown in figures 13 and 17, in the use position of the wiper blade frame 20, the protrusions 92 of the upper channel stay outside of the ears 26 so that the wiper blade frame 20 can pivot freely between its two angular positions even when the protrusions occupy their outer position.

## Claims

1. A connector (28) for joining a wiper blade frame (20) to a hook-slot wiper arm (30A, 30B), the connector (28) comprising:
- a central body portion (48);
- two side walls (54) interconnected to the central body (48) which define an upper and a lower channels (58A, 58B) for receiving a hook (34) of the wiper arm (30A, 30B) in an attached position in which it is hooked around the central body portion (48) of the connector (28), each side wall (54) at least partially delimiting said upper and lower channels (58A, 58B) from an external area outside said channels;
- at least one protrusion (92) extending at one free end of at least one of said side walls (54), the protrusion being mounted so as to pivot transversally between an inner position to which the protrusion (92) is elastically biased and in which the protrusion (92) extends into one of the channels (58A, 58B), and an outer position in which the protrusion (92) extends into the external area; and
- at least a pair of opposed movable protrusions (92) each arranged symmetrically on a side wall (54) on both sides of the same channel (58A, 58B);
**characterized in that** the connector comprises two pairs of opposed movable protrusions (92), each pair being arranged in each channel (58A, 58B).

2. A connector (28) according to claim 1, **characterized in that** in its inner position, each protrusion (92) is wholly retracted with respect to the outer face (54B) of the corresponding side wall (54).

3. A connector (28) according to any one of the previous claims, **characterized in that** each movable protrusion (92) is borne by a resilient leg (96) which present a front end fixed to the associated side wall (54) and a rear free end (82).

4. A connector (28) according to the previous claim, **characterized in that** the leg (96) is formed by slitting a rear end portion of the associated side wall (54).

5. An assembly comprising a wiper blade frame (20) comprising a rivet (24) extending crosswise between two ears (26) of a bridge portion (22) and a connector (28) according to any one of the previous claims, **characterized in that** the connector (28) is adapted to snap-fit over the rivet (24) pivotally around an axis of the rivet (24) so that the wiper blade frame (20) can pivot between a first service up position in which a rear portion the side walls (54) comprising the protrusions (92) is out of the bridge portion (22) and a second use position in which the protrusions (92) of the lower channel (58A) are received between the ears (26) of the bridge portion (22).

6. An assembly according to the previous claim, **characterized in that** when the protrusions (92) of the lower channel (58A) occupy their inner position while the wiper blade frame (20) is in its service up position, pivoting of the wiper blade frame (20) toward the use position is prevented by abutment of upper edge of the ears (26) against the protrusions (92).

7. An assembly according to any one of the claims 5 or 6, **characterized in that** when the wiper blade frame (20) occupies its use position, the movement of the protrusions (28) toward their outer position is prevented by abutment of the protrusions (92) against an inner face of the ears (26).

8. An assembly according to any one of the claims 5 to 7, **characterized in that** in the use position of the connector (28), the protrusions (92) of the upper channel (58B) stay outside of the ears (26) so that the wiper blade frame (20) can pivot freely between its two angular positions even when the protrusions (92) occupy their outer position.

## Patentansprüche

1. Verbinder (28) zum Verbinden eines Wischblattrahmens (20) mit einem Hakenschlitz-Scheibenwischerarm (30A, 30B), wobei der Verbinder (28) Folgendes umfasst:
- einen mittleren Körperabschnitt (48),
- zwei Seitenwände (54), die mit dem mittleren Körper (48) verbunden sind und einen oberen und einen unteren Kanal (58A, 58B) zur Aufnahme eines Hakens (34) des Scheibenwischerarms (30A, 30B) in einer angebrachten Position definieren, in der er um den mittleren Körperabschnitt (48) des Verbinders (28) herumgehakt ist, wobei jede Seitenwand (54) den oberen und den unteren Kanal (58A, 58B) mindestens teilweise von einem Außenbereich außerhalb der Kanäle abgrenzt,
- mindestens einen Vorsprung (92), der sich an einem freien Ende mindestens einer der Seitenwände (54) erstreckt, wobei der Vorsprung so montiert ist, dass er quer zwischen einer inneren Position, zu der der Vorsprung (92) elastisch vorgespannt ist und in der sich der Vorsprung (92) in einen der Kanäle (58A, 58B) erstreckt, und einer äußeren Position, in der sich der Vorsprung (92) in den Außenbereich erstreckt, schwenkt, und
- mindestens ein Paar gegenüberliegender beweglicher Vorsprünge (92), die jeweils symmetrisch an einer Seitenwand (54) an beiden Seiten desselben Kanals (58A, 58B) angeordnet sind,
**dadurch gekennzeichnet, dass** der Verbinder zwei Paare gegenüberliegender beweglicher Vorsprünge (92) umfasst, wobei jedes Paar in jedem Kanal (58A, 58B) angeordnet ist.

2. Verbinder (28) nach Anspruch 1, **dadurch gekennzeichnet, dass** jeder Vorsprung (92) in seiner inneren Position bezüglich der Außenfläche (54B) der entsprechenden Seitenwand (54) vollständig zurückgezogen ist.

3. Verbinder (28) nach einem der vorhergehenden Ansprüche, **dadurch gekennzeichnet, dass** jeder bewegliche Vorsprung (92) von einem federnden Schenkel (96) getragen wird, der ein vorderes Ende, das an der zugeordneten Seitenwand (54) befestigt ist, und ein hinteres freies Ende (82) aufweist.

4. Verbinder (28) nach dem vorhergehenden Anspruch, **dadurch gekennzeichnet, dass** der Schenkel (96) durch Schlitzen eines hinteren Endabschnitts der zugeordneten Seitenwand (54) ausgebildet wird.

5. Anordnung, umfassend einen Wischblattrahmen (20), der einen sich quer zwischen zwei Laschen (26) eines Brückenabschnitts (22) erstreckenden Niet (24) umfasst, und einen Verbinder (28) nach einem der vorhergehenden Ansprüche, **dadurch gekennzeichnet, dass** der Verbinder (28) dazu ausgeführt ist, über den Niet (24) um eine Achse des Niets (24) schwenkend einzurasten, so dass der Wischblattrahmen (20) zwischen einer ersten aufrechten Service-Position, in der sich ein hinterer Abschnitt der Seitenwände (54), der die Vorsprünge (92) umfasst, außerhalb des Brückenabschnitts (22) befindet, und einer zweiten Gebrauchsposition schwenken kann, in der die Vorsprünge (92) des unteren Kanals (58A) zwischen den Laschen (26) des Brückenabschnitts (22) aufgenommen sind.

6. Anordnung nach dem vorhergehenden Anspruch, **dadurch gekennzeichnet, dass** ein Schwenken des Wischblattrahmens (20) zu seiner Gebrauchsposition hin, wenn die Vorsprünge (92) des unteren Kanals (58A) ihre innere Position einnehmen, während der Wischblattrahmen (20) in seiner aufrechten Service-Position ist, durch Anlage des oberen Rands der Laschen (26) an den Vorsprüngen (92) verhindert wird.

7. Anordnung nach einem der Ansprüche 5 oder 6, **dadurch gekennzeichnet, dass** das Bewegen der Vorsprünge (28) zu ihrer äußeren Position, wenn der Wischblattrahmen (20) seine Gebrauchsposition einnimmt, durch Anlage der Vorsprünge (92) an einer Innenfläche der Laschen (26) verhindert wird.

8. Anordnung nach einem der Ansprüche 5 bis 7, **dadurch gekennzeichnet, dass** die Vorsprünge (92) des oberen Kanals (58B) in der Gebrauchsposition des Verbinders (28) außerhalb der Laschen (26) bleiben, so dass der Wischblattrahmen (20) frei zwischen seinen beiden Winkelpositionen schwenken kann, selbst wenn die Vorsprünge (92) ihre äußere Position einnehmen.

## Revendications

1. Connecteur (28) pour joindre un cadre de balai d'essuie-glace (20) à un bras d'essuie-glace à fente à crochet (30A, 30B), le connecteur (28) comprenant :
une partie corps central (48) ;
deux parois latérales (54) interconnectées au corps central (48) qui définissent des canaux supérieur et inférieur (58A, 58B) pour recevoir un crochet (34) du bras d'essuie-glace (30A, 30B) dans une position attachée dans laquelle il est accroché autour de la partie corps central (48) du connecteur (28), chaque paroi latérale (54) délimitant au moins partiellement lesdits canaux supérieur et inférieur (58A, 58B) à partir d'une zone externe à l'extérieur desdits canaux ;
au moins une saillie (92) s'étendant à une extrémité libre d'au moins une desdites parois latérales (54), la saillie étant montée de sorte à pivoter transversalement entre une position intérieure vers laquelle la saillie (92) est sollicitée élastiquement et dans laquelle la saillie (92) s'étend dans un des canaux (58A, 58B), et une position extérieure dans laquelle la saillie (92) s'étend dans la zone externe ; et
au moins une paire de saillies mobiles (92) opposées disposées chacune symétriquement sur une paroi latérale (54) des deux côtés du même canal (58A, 58B) ;
**caractérisé en ce que** le connecteur comprend deux paires de saillies mobiles (92) opposées, chaque paire étant disposée dans chaque canal (58A, 58B).

2. Connecteur (28) selon la revendication 1, **caractérisé en ce que** dans sa position intérieure, chaque saillie (92) est entièrement rétractée par rapport à la face externe (54B) de la paroi latérale (54) correspondante.

3. Connecteur (28) selon l'une quelconque des revendications précédentes, **caractérisé en ce que** chaque saillie mobile (92) est portée par une patte élastique (96) qui présente une extrémité avant fixée à la paroi latérale (54) associée et une extrémité arrière libre (82) .

4. Connecteur (28) selon la revendication précédente, **caractérisé en ce que** la patte (96) est formée en fendant une partie d'extrémité arrière de la paroi latérale (54) associée.

5. Ensemble comprenant un cadre de balai d'essuie-glace (20) comprenant un rivet (24) s'étendant transversalement entre deux oreilles (26) d'une partie de pont (22) et un connecteur (28) selon l'une quelconque des revendications précédentes, **caractérisé en ce que** le connecteur (28) est conçu pour s'encliqueter sur le rivet (24) en pivotant autour d'un axe du rivet (24) de sorte que le cadre de balai d'essuie-glace (20) puisse pivoter entre une première position haute de service dans laquelle une partie arrière des parois latérales (54) comprenant les saillies (92) est hors de la partie de pont (22) et une seconde position d'utilisation dans laquelle les saillies (92) du canal inférieur (58A) sont reçues entre les oreilles (26) de la partie de pont (22).

6. Ensemble selon la revendication précédente, **caractérisé en ce que** lorsque les saillies (92) du canal inférieur (58A) occupent leur position intérieure alors que le cadre de balai d'essuie-glace (20) est dans sa position haute de service, le pivotement du cadre de balai d'essuie-glace (20) vers la position d'utilisation est empêché par la mise en butée du bord supérieur des oreilles (26) contre les saillies (92).

7. Ensemble selon l'une quelconque des revendications 5 ou 6, **caractérisé en ce que** lorsque le cadre de balai d'essuie-glace (20) occupe sa position d'utilisation, le déplacement des saillies (28) vers leur position extérieure est empêché par la mise en butée des saillies (92) contre une face interne des oreilles (26).

8. Ensemble selon l'une quelconque des revendications 5 à 7, **caractérisé en ce que** dans la position d'utilisation du connecteur (28), les saillies (92) du canal supérieur (58B) restent à l'extérieur des oreilles (26) de sorte que le cadre de balai d'essuie-glace (20) puisse pivoter librement entre ses deux positions angulaires même lorsque les saillies (92) occupent leur position extérieure.
